# EUROPEAN PATENT APPLICATION

(11) **EP 4 733 514 A1**
(43) Date of publication of application: **29.04.2026**
(21) Application number: 24208963.9
(22) Date of filing: 25.10.2024
(51) Int. Cl.: E04G 5/00, E04G 5/02, E04G 5/04, G01P 15/04, G05B 19/048, G08B 29/02

(54) **A SCAFFOLD SAFETY MONITORING METHOD, AN UPRIGHT LOAD MONITOR UNIT AND A SCAFFOLD SAFETY MONITORING SYSTEM**

(71) Applicant: Scaffsense AB, 691 38 Karlskoga (SE)
(72) Inventor: WREJE-LARSSON, Tobias, 691 38 Karlskoga (SE); BERNDTSSON, Kjetil, 691 38 Karlskoga (SE)
(74) Representative: Bjerkén Hynell KB

(57) **Abstract**

The invention relates to a scaffold safety monitoring method (400) for monitoring a scaffold (100) that comprises a substantially vertical upright (110). The method (400) comprises providing (440) load data by means of an upright load monitor unit (10) that is configured to monitor a load carried by an upright (110), calculating (450) a load derivative of said load data to provide the change of the load data per time unit, imbalance determining (460) an imbalance of the scaffold (100) in case said load derivative is not within a preset safety reference range, and signalling imbalance alarm (470) in case an imbalance is determined. The invention further relates to an upright load monitor unit and a scaffold safety monitoring system.

## Description

### TECHNICAL FIELD

The present invention generally pertains to ensuring scaffold safety, and in particular relates to a scaffold safety monitoring method, an upright load monitor unit, and a scaffold safety monitoring system.

### BACKGROUND

A scaffold, or scaffolding, is a temporary assembly commonly used e.g. in constructing, maintaining, or repairing structures such as buildings, bridges or other large objects. A primary object of a scaffold is to support work crews and materials. A scaffold typically comprises a truss or a framework comprising substantially vertical and substantially horizontal bars. The substantially vertical bars are often referred to as uprights or standards.

Even though present scaffolds generally fulfil their intended function satisfactorily, there is still room for improvement, especially in the area of safety.

### SUMMARY

An object of the invention is to ensure the safety associated with scaffold operations. Preferably, the invention is to allow for versatile and relatively low-cost continuous scaffold monitoring for early detection of a failure including any balance issue that could result in the scaffold loosening, tilting, or collapsing. Thereby, the invention makes possible proactive maintenance and intervention before any critical failure occurs.

In accordance with the present disclosure, the object is reached by a scaffold safety monitoring method for monitoring a scaffold that comprises a substantially vertical upright. The method comprises providing load data by means of an upright load monitor unit that is configured to monitor a load carried by an upright, calculating a load derivative of said load data to provide the change of the load data per time unit, imbalance determining an imbalance of the scaffold in case said load derivative is not within a preset safety reference range, and signalling imbalance alarm in case an imbalance is determined.

An imbalance may be caused by a structural failure, such as damage to an internal scaffold connection due to improper assembly, tampering, wear, or breakage. A vehicle collision with the scaffold is another potential cause of imbalance. Additionally, imbalances may be caused by instabilities in the underlying ground conditions, such as soil settlement or shifting. In this context, it is to be noted that environmental factors such as wind may lead to imbalance, but imbalances attributed to specific environment factors may be tolerated to a certain degree.

By basing the imbalance determining on the load derivative, an imbalance can be detected at an early stage, i.e. at the onset of an event that has caused the imbalance. Moreover, the method of the present disclosure may reduce costs in terms of installation costs, components used, and calculation power. Basing the imbalance determining on the load derivative may further facilitate detecting whether a load deviation is positive or negative. Alternative solutions may involve instead measuring a total load carried by an upright, which may be of use for simple overload detection, but may not be effective for imbalance detection. Such alternative solutions may also be marred with the drawbacks that the method and the set-up of the corresponding system is more complex, e.g. requiring inputs regarding load thresholds. However, the present disclosure does not exclude that in addition to monitoring a load derivative, a total load is also measured.

In accordance with another aspect of the present disclosure, the object is reached by an upright load monitor unit for the scaffold safety monitoring method. The upright load monitor unit being configured to monitor a load carried by an upright of the scaffold, and comprising an energy source, a force monitor, and a communication unit.

The upright load monitor unit may e.g. be disposed between a nut part of a base jack and the upright, or be disposed below a base plate of the jack part, or be in the form of a sole pad that is adapted to be positioned on a ground to support the scaffold. Typically, the sole pad is to be positioned directly on the ground.

In accordance with another aspect of the present disclosure, the object is reached by a scaffold safety monitoring system for a scaffold. The system comprises the upright load monitor unit, and a control unit that is adapted to receive load data from the upright load monitor unit and signal an imbalance alarm in case an imbalance is determined.

Further advantages and advantageous features of the invention are disclosed in the following description and in the dependent claims.

### DESCRIPTION OF THE DRAWINGS

Below embodiments of the invention will be described with reference to the drawings, in which
- figure 1: shows a structure in the form of a building with a scaffold fixed thereto, the scaffold being provided with an upright load monitor unit,
- figure 2: schematically illustrates a general example of the upright load monitor unit of figure 1,
- figure 3: schematically illustrates another general example of the upright load monitor unit of figure 1,
- figure 4: is similar to figure 1, but with the scaffold also being provided with a vibration sensor unit, a base jack and a sole pad are also illustrated,
- figure 5: shows an example where the scaffold comprises a plurality of upright load monitor units and a plurality of vibration sensor units,
- figure 6: shows the sole pad illustrated in figure 4 in more detail, the sole pad being adapted to be positioned on a ground to support the scaffold of figures 1 to 5,
- figure 7: illustrates a scaffold safety monitoring system that comprises an upright load monitor unit,
- figure 8: shows the base jack of figure 4 in more detail, together with two examples of upright load monitor units,
- figures 9-11: show examples of the upright load monitor units schematically illustrated in figures 1 to 5, and
- figure 12: illustrates a scaffold safety monitoring method using the upright load monitor unit of figures 1 to 5 or 7 to 11.

### DETAILED DESCRIPTION OF EMBODIMENTS

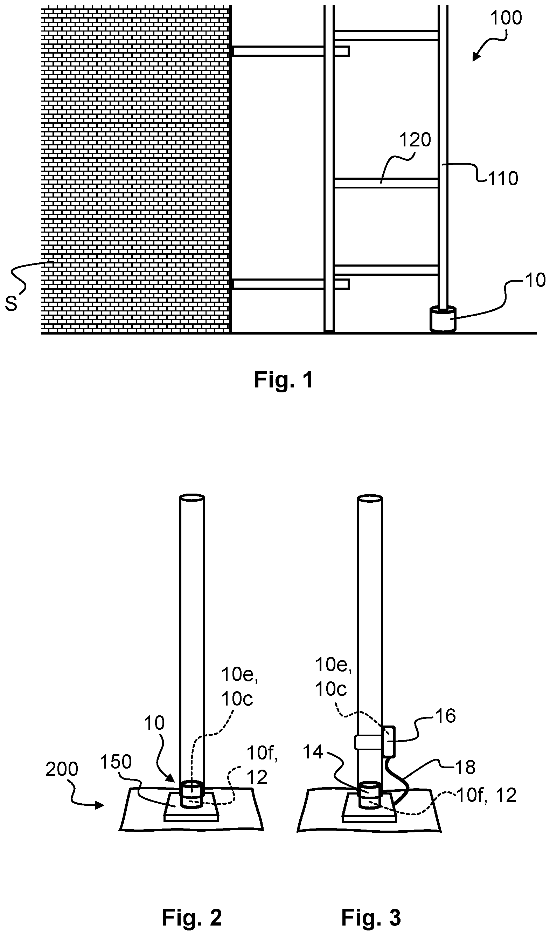

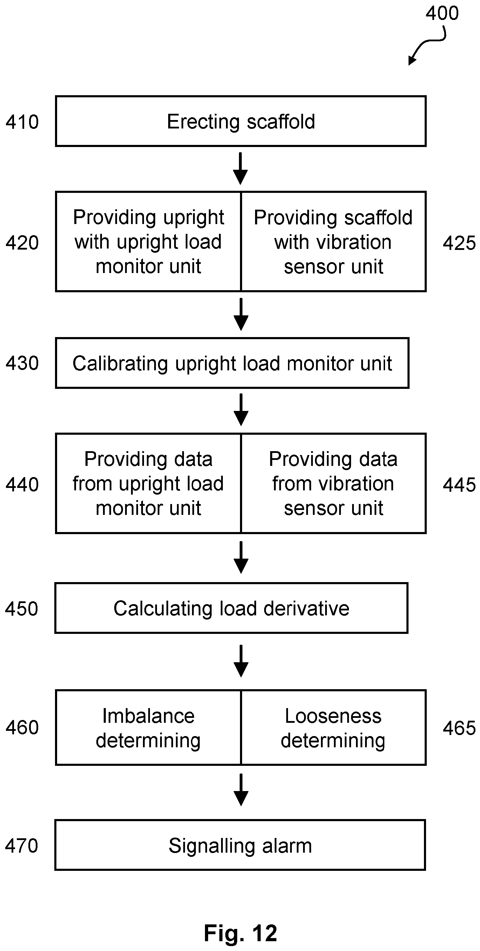

Referring initially to figures 1 and 12, the present disclosure presents a scaffold safety monitoring method 400 for monitoring a scaffold 100 that comprises a substantially vertical upright 110. Figure 1 illustrates a building S to which a scaffold 100 is attached. The scaffold may, as exemplified, comprise a plurality of uprights 110 and a plurality of substantially horizontal bars 120 arranged therebetween. The monitoring method 400 comprises providing 440 load data by means of an upright load monitor unit 10 that is configured to monitor a load carried by an upright 110.

As exemplified in figure 1, the upright load monitor unit 10 may be disposed below an upright 110. Further, the monitoring method 400 comprises calculating 450 a load derivative - a first order derivative - of said load data to provide the change of the load data per time unit, imbalance determining 460 an imbalance of the scaffold 100 in case said load derivative is not within a preset safety reference range, and signalling imbalance alarm 470 in case an imbalance is determined.

By imbalance determining 460 is herein meant that an imbalance is determined, in other words that the monitoring method 400 concludes that an imbalance is present. As is to be apprehended, the monitoring method 400 is typically computer-implemented.

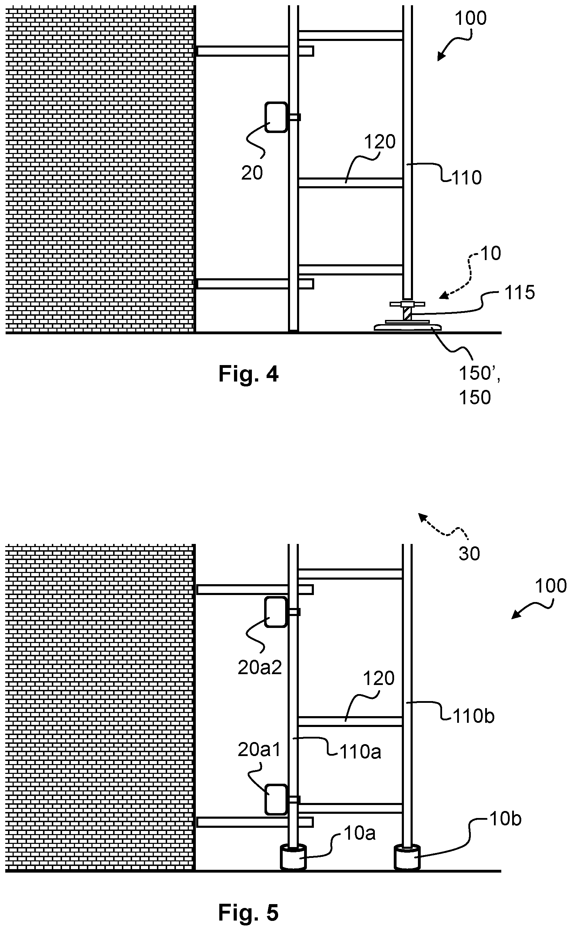

As is shown in figure 5, the scaffold may comprise at least two uprights 110, denoted 110a and 110b, each monitored by a respective upright load monitor unit 10, denoted 10a and 10b. The method's providing 440 load data by means of an upright load monitor unit 10 may comprise providing first load data of a first upright load monitor unit 10a configured to monitor a first upright 110a, and providing second load data of a second upright load monitor unit 10b configured to monitor a second upright 110b. Next, imbalance determining 460 may be based on the load data of the first and second upright load monitor units 10a, 10b. Thus, both the first and second upright load monitor unit 10a, 10b may be taken into account for the imbalance determining 460. For example, the imbalance determining 460 may be triggered in case a first load derivative is positive while a second load derivative is negative. Such outputs of the upright load monitor units 10a, 10b may indicate that there is an imbalance as a load on a first upright 110a increases simultaneously as a load on a second upright 110b decreases. It is to be noted that in this context the total load on the uprights 110a, 110b may, at least in some applications, be of less importance for early detection of an imbalance that may potentially lead to a critical failure.

The monitoring method 400 may comprise imbalance determining 460 in case an absolute value of the load derivative is not within the safety reference range of e.g. 0 to 100 newton per second. If the monitoring method 400 includes consideration of whether the load derivative is positive or negative, the monitoring method 400 may comprise imbalance determining 460 in case the load derivative is not within the safety reference range of e.g. -50 to 100 newton per second. Thus, a lower absolute value (exemplified as 50) of a negative load derivative may trigger the imbalance determining 460 as compared to a positive load derivative (exemplified as 100).

Moreover, the monitoring method 400 may comprise imbalance determining 460 in case a temporal derivative of said load derivative is not within a preset safety derivative reference range. The load derivative, or temporal derivative, of the load data corresponds to the change of the load data per time unit, essentially represents the velocity of the load data change. Now, the temporal derivative of the load derivative - a second order derivative - can be said to represent the acceleration of the load data change. At least in some applications, considering the temporal derivative of said load derivative may result in a particularly quick imbalance determining.

The monitoring method 400 may comprise calibrating 430 the upright load monitor unit 10 once the scaffold 100 has been erected 410 and provided 420 with the upright load monitor unit 10. Generally, calibration may improve the accuracy of the upright load monitor unit 10 and thereby enhance the safety monitoring. Furter, periodical calibration may prevent sensor drift. Moreover, calibration may allow adaptation to scaffold modifications and ensure accuracy even if the scaffold is subjected to new loads, like heavy equipment or machinery.

The monitoring method 400 may comprise calibrating 430 the upright load monitor unit 10 once the structural safety of the scaffold 100 has been validated or approved. A validation or approval of the scaffold 100 may be performed after erection, or periodically, or when desired, for example by a qualified and/or certified professional. For example, a validation, and consequent calibration, may be performed after the design, e.g. width or height, of the scaffold 100 has been modified or the scaffold has been loaded with a heavy load such as a machine.

Referring now to figures 4, 5 and 12, the monitoring method 400 may comprise providing 445 data by means of a vibration sensor unit 20 that is configured to monitor a vibration of the scaffold 100. The vibration sensor unit, or accelerometer, may measure a vibration or oscillation of the scaffold. Exemplary vibration sensor units 20, and suitable exemplary positions therefore, are schematically shown in figures 4, 5 and 7. A vibration sensor unit 20 may be used together with a load monitor unit 10 to enhance the monitoring method 400. Merely as an example, a vibration sensor unit 20 may be particularly suitable for detecting whether one (or several) undepicted wall mounting or fixing of the scaffold 10 is loose.

As illustrated in figure 5, the vibration sensor units 20 may be disposed in the vicinity of wall mounting areas of the scaffold 100. In order to detect whether a particular wall mounting is loose, it may be beneficial to assign a vibration sensor unit 20 to that wall mounting, and dispose the vibration sensor unit substantially straight outside the wall mounting. One vibration sensor unit may be arranged in the vicinity of each wall mounting. It may be beneficial to arrange one vibration sensor unit 20 substantially straight outside each wall mounting.

Referring to the two preceding paragraphs, the monitoring method 400 may comprise looseness determining 465 a loosening fixing of the scaffold 100 to a structure S in case the data from the vibration sensor unit 20 is not within a vibration safety reference range. Further, the monitoring method 400 may comprise signalling looseness alarm 470 in case a loosening is determined.

By looseness determining 465 is herein meant that a loose fixing or wall mounting is determined. Such as loose fixing may in some applications be determined before an imbalance is determined. An imbalance may result from a loose fixing.

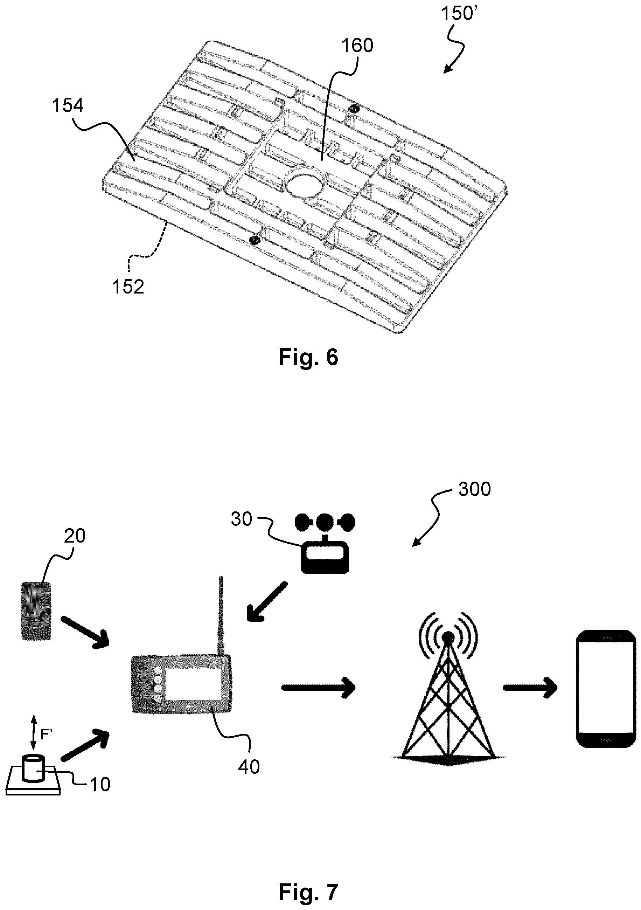

Referring to figures 5 and 7 that illustrate or denote an anemometer unit 30, the monitoring method 400 may comprise providing wind data by means of an anemometer unit 30 that is configured to monitor the ambient conditions of the scaffold 100. The monitoring method 400 may comprise determining the safety of the scaffold based on the wind data. Typically, the monitoring method 400 may comprise allowing some increased imbalance and vibrations if the anemometer unit 30 indicates high wind speeds. However, alternatively, the monitoring method 400 may comprise signalling a wind alarm should the wind exceed a preset safety wind threshold.

The monitoring method 400 may comprise taking the wind data of the anemometer unit 30 into account when performing the imbalance determining 460 and the looseness determining 465. For example, if the wind data indicates relatively high wind speeds, the safety reference range for the imbalance determining 460 may be increased. In some applications, said safety reference range may be increased dependent on the wind data.

Referring generally to figures 2 and 3, the present disclosure presents an upright load monitor unit 10 that is suitable for the scaffold safety monitoring method 400 described herein. The upright load monitor unit 10 is configured to monitor a load carried by an upright 110 of the scaffold 100 and comprises an undepicted energy source 10e, a force monitor 10f, and an undepicted communication unit 10c. Typically, the energy source 10e may be a secondary battery. The communication unit 10c is preferably adapted to communicate wirelessly using LoRaWAN.

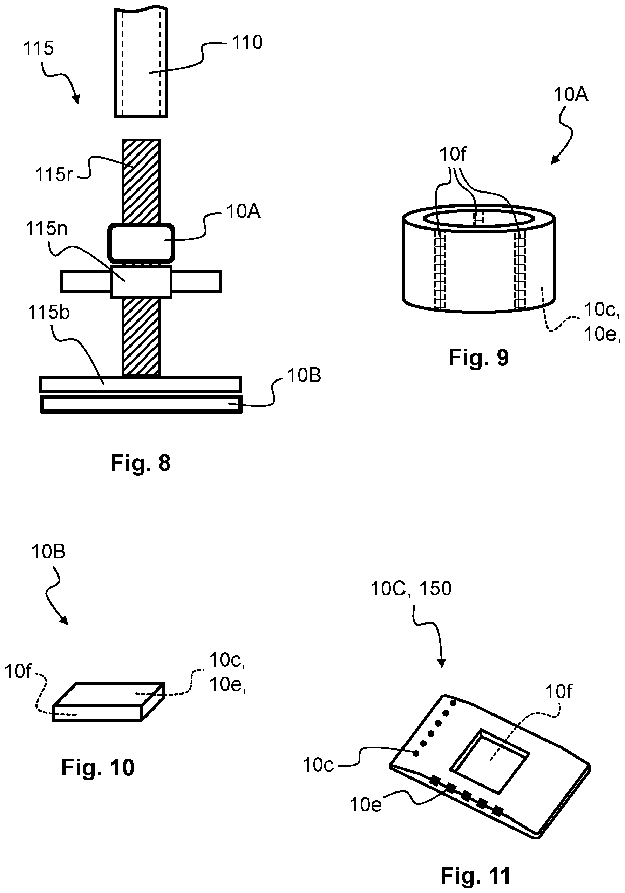

Referring to figures 4 and 8, the scaffold 100 may comprise a base jack 115 arranged to support the, typically tubular, upright 100. The base jack 115 may comprise a base plate 115b adapted to be placed on the ground to support the scaffold 100. The base plate 115b may in alternative be placed in or on a footing component, such as a wooden plank or steel plate. A footing component may be in the form of a sole pad 150, 150', as illustrated herein. A threaded rod part 115r is secured to the base plate 115b and extends upwards from the base plate 115b in use. A nut part 115n is arranged on the rod part 115r, and the upright 110 may rest on the nut part 115n. As is to be apprehended from figures 4 and 8, the nut part 115n may be rotated, either manually or by a tool, to adjust the operative height of the base jack 115. Typically, a distal, or upper, portion of the rod part 115r is received inside the hollow upright 110.

As shown in figures 8 and 9, the upright load monitor unit 10A of one example or embodiment may be configured to be disposed between the nut part 115n of the base jack 115 and the upright 100. The upright load monitor unit 10A, or first upright load monitor unit 10A, may comprise a through-opening for the rod 115r of the base jack 115. In that way, the upright load monitor unit 10A may be securely attached to the base jack 115. Further, the upright load monitor unit 10A may comprise a body, or load-bearing body, that is adapted to be clamped between the nut part 115 and the upright 100. In some examples, and as illustrated in figures 8 and 9, that body may be essentially in the shape of a collar or more precisely a circular cylinder. The body may thus bear the weight of the upright 100. As is shown in figure 9, the force monitor 10f of the upright load monitor unit 10 may be arranged on or in the body. As is illustrated, there may be a number of force monitors 10f arranged along a perimeter of the body, to accurately monitor the load carried by the upright 110. The force monitors 10f may be equidistantly arranged along the perimeter. In the illustrated example, there are three force monitors 10f separated approximately 120 degrees.

Referring to figures 8 and 10, the upright load monitor unit 10B of another example or embodiment may be configured to be disposed below the base plate 115b of the jack part 115. Such an upright load monitor unit 10B, or second upright load monitor unit 10B, may be dimensioned to be received in a prior art sole pad 150', see figures 4 and 6, that is adapted to be placed on a ground to support the scaffold 100. As is shown in figure 8, such an upright load monitor unit 10B may essentially have the same footprint as the base plate 115b. Further, even though not shown in detail, the upright load monitor unit 10B may comprise a body, or load-bearing body, that is adapted to bear the load of the upright, and that comprises one or more force monitors 10f.

Referring to figures 4 and 11, the upright load monitor unit 10C of yet another example or embodiment may be provided in the form of a sole pad 10C, 150 that is adapted to be placed on the ground to support the scaffold 100. Such a sole pad 10C, 150 that forms an upright load monitor unit may be referred to as a smart sole pad. The smart sole pad 10C, 150 may be of substantially the same shape as a prior art sole pad 150', compare figures 6 and 11, but may comprise the internal components energy source 10e, force monitor 10f, and communication unit 10c. The upright load monitor unit in the form of a smart sole pad 10C, 150 may comprise a body, or load-bearing body, that is adapted to bear the load of the upright, and that comprises one or more force monitors 10f.

The smart sole pad 10C, 150 may comprise a support area for the base plate 115b of the base jack 115, see e.g. figure 11. The support area may be provided as a recess in the smart sole pad 10C, 150, the recess being adapted to receive the base plate 115b of the base jack 115 therein. The force monitor 10f may be arranged below the support area. The above-mentioned or load-bearing body may thus be arranged below the support area. As illustrated, the area of the smart sole pad 10C, 150 may typically be significantly larger than the area of the base plate 115b, to distribute the load and securely support the scaffold. The area, or footprint, of the smart sole part may e.g. be at least 3 times the area, or footprint, or the base plate. In the disclosed example, the footprint ratio is approximately 5. A suitable footprint ratio range may be 3 to 10.

The upright load monitor unit 10 may comprise a sensor part or portion 14 comprising the force monitor 10f, a separate communication part or portion 16 for the communication unit 10c, and a cable 18 connecting the sensor portion 14 to the communication portion 16. This solution applies generally to the herein exemplified upright load monitor units, apart from the smart sole pad 10C, 150 that is based on all components being integrated in one unit. Figure 3 schematically illustrates an upright load monitor unit 10 with a sensor portion 14 and a separate communication portion 16. One advantage is that the communication portion 16 may be positioned to facilitate communication, while the sensor portion 14 may be positioned to facilitate force monitoring.

In some embodiments, as illustrated schematically in figures 2 and 3, a sensor portion 14 of the upright load monitor unit 10 may be adapted to be arranged at least partly internally the upright 110 and the communication portion 16 may be adapted to be arranged at least partly externally the upright 110.

Preferably, in the embodiments and examples described herein, the upright load monitor unit 10 is configured to determine a load derivative of the load carried by the upright 110. The force monitor 10f may comprise a piezoresistive sensor. The three force monitors 10f of figure 9 may be piezoresistive sensors. The piezoresistive sensors, or force monitors 10f, may be elongated and extend along the height of the upright load monitor unit 10, in use.

A piezoresistive sensor may be particularly suitable to determine a load derivative. Further, a piezoresistive sensor may tolerate significant strain without compromising accuracy. Also, such a sensor may be cost-effective as compared to alternatives.

Referring again to the schematical illustrations of figures 2 and 3, in order to determine a load derivative, the force monitor 10f may comprise a differential force sensor 12.

The upright load monitor unit 10 may be adapted to output, from the communication unit 10c, a load derivative of the load carried by the upright 110. Thus, the upright load monitor unit 10 may comprise an undepicted processing device, powered by the energy source 10e and connected to the force monitor 10f, that is adapted to calculate the load derivative.

Referring to figure 7, the present disclosure discloses a scaffold safety monitoring system 300 for the scaffold 100 described herein. The monitoring system 300 comprises at least one upright load monitor unit 10 described herein. Furthermore, the monitoring system 300 comprises a control unit 40 that is adapted to receive load data from the upright load monitor unit 10 and signal an imbalance alarm in case an imbalance is determined.

Referring to figure 7 together with figure 1 or 4, the scaffold 100 may be positioned along a structure S and comprise at least two rows of uprights 110 arranged substantially in parallel. For simplicity, and to reduce costs, the scaffold safety monitoring system 300 may comprise an upright load monitor unit 10 for at least one of the uprights 110 whereas at least another one of the uprights 110 does not comprise an upright load monitor unit 10. As is exemplified, at least one of the uprights 110 in a row furthest from the structure S may comprise an upright load monitor unit 10.

In an undepicted example, the first and last one of the uprights 110 in the row furthest from the structure S comprise an upright load monitor unit 10. These uprights 110 may form outer corners of the scaffold 100 and may be critical to monitor. In some examples, as may be shown in figure 5, each one of the uprights 110 comprises an upright load monitor unit 10 to safety monitor each upright.

Referring again to figure 7, together with figures 4 and 5, the scaffold safety monitoring system 300 may comprise a vibration sensor unit 20 that is adapted to be attached to the scaffold 100, wherein the control unit 40 is adapted to receive data from the vibration sensor unit 20 and signal a looseness alarm in case a loosening is determined. The scaffold safety monitoring system 300 may comprise an anemometer unit 30 that is adapted to be attached to the scaffold 100. The control unit 40 may then be adapted to receive data from the anemometer unit 30 and, in case the data from the anemometer unit 30 indicates wind speeds above a threshold value, not to signal a looseness alarm.

For better understanding regarding how the scaffold safety monitoring system 300 may function, e.g. as regards communication between the upright load monitor unit 10, the optional vibration sensor unit 20, and the control unit 40, reference is made to the publication WO2023280666A1. For understanding at least the communication, the upright load monitor unit 10 described herein may be seen as corresponding to the inertial sensor units of WO2023280666A1. The control unit 40 may be seen as corresponding to the signal receiving unit of WO2023280666A1. As shown in figure 7, the control unit 40 may communicate with a user device (illustrated as a mobile phone). The imbalance alarm, and/or the looseness alarm, may be signalled to the user device by the control unit 40. Alternatively, or in addition to, such signalling such alarm(s) may involve triggering an alerting means that may comprise local light and/or audio emitters.

It is to be understood that the embodiments described above and shown in the drawings are only to be regarded as non-limiting examples of the invention, and that the latter may be modified in many ways within the scope of the appended claims. Further, the features and associated advantages described in relation to the scaffold safety monitoring method, the upright load monitor unit, and the scaffold safety monitoring system are applicable to all aspects of the disclosure.

## Claims

1. A scaffold safety monitoring method (400) for monitoring a scaffold (100) that comprises a substantially vertical upright (110), the method (400) comprising
- providing (440) load data by means of an upright load monitor unit (10) that is configured to monitor a load carried by an upright (110),
- calculating (450) a load derivative of said load data to provide the change of the load data per time unit,
- imbalance determining (460) an imbalance of the scaffold (100) in case said load derivative is not within a preset safety reference range, and
- signalling imbalance alarm (470) in case an imbalance is determined.

2. The scaffold safety monitoring method (400) of claim 1, the scaffold comprising at least two uprights (110), wherein
providing (440) load data by means of an upright load monitor unit (10) comprises
providing first load data of a first upright load monitor unit (10a) configured to monitor a first upright (1 10a), and
providing second load data of a second upright load monitor unit (10b) configured to monitor a second upright (110b), and wherein
imbalance determining (460) is based on the load data of the first and second upright load monitor units (10a, 10b).

3. The scaffold safety monitoring method (400) of claim 2, comprising imbalance determining (460) in case a first load derivative is positive while a second load derivative is negative.

4. The scaffold safety monitoring method (400) of any preceding claim, comprising imbalance determining (460) in case a temporal derivative of said load derivative is not within a preset safety derivative reference range.

5. The scaffold safety monitoring method (400) of any preceding claim, comprising
- providing (445) data by means of a vibration sensor unit (20) that is configured to monitor a vibration of the scaffold (100),
- looseness determining (465) a loosening fixing of the scaffold (100) to a structure (S) in case the data from the vibration sensor unit (20) is not within a vibration safety reference range, and
- signalling looseness alarm (470) in case a loosening is determined.

6. The scaffold safety monitoring method (400) according to claims 2 and 5, comprising
- providing wind data by means of an anemometer unit (30) that is configured to monitor the ambient conditions of the scaffold (100), and
- determining the safety of the scaffold based on the wind data, comprising taking the wind data of the anemometer unit (30) into account when performing the imbalance determining (460) and the looseness determining (465).

7. The scaffold safety monitoring method (400) of any preceding claim, comprising
- calibrating (430) the upright load monitor unit (10) once the scaffold (100) has been erected (410) and provided (420) with the upright load monitor unit (10).

8. An upright load monitor unit (10) for the scaffold safety monitoring method (400) according to any preceding claim, the scaffold (100) comprising a substantially vertical upright (110), the upright load monitor unit (10) being configured to monitor a load carried by an upright (110) of the scaffold (100) and comprising an energy source (10e), a force monitor (10f), and a communication unit (10c).

9. The upright load monitor unit (10) of claim 8, comprising a sensor portion (14) comprising the force monitor (10f), a separate communication portion (16) for the communication unit (10c), and a cable (18) connecting the sensor portion (14) to the communication portion (16).

10. The upright load monitor unit (10) of claims 8 or 9, configured to determine a load derivative of the load carried by the upright (110).

11. The upright load monitor unit (10) according to any of claims 8 to 10, wherein the force monitor (10f) comprises a piezoresistive sensor.

12. The upright load monitor unit (10) according to any of claims 8 to 11, the scaffold (100) comprising a base jack (115) arranged to support the upright (100), wherein the upright load monitor unit (10) is
configured (10A) to be disposed between a nut part (115n) of the base jack (115) and the upright (100),
configured (10B) to be disposed below a base plate (115b) of the jack part (115), and dimensioned to be received in a sole pad (150) that is adapted to be positioned on a ground to support the scaffold (100), or
provided in the form of a sole pad (10C, 150) that is adapted to be positioned on a ground to support the scaffold (100).

13. The upright load monitor unit (10A) of claim 12, configured to be disposed between a nut part (115n) of the base jack (115) and the upright (100), and comprising a through-opening for a rod (115r) of the base jack (115), and comprising a body that is adapted to be clamped between the nut part (115) and the upright (100), the body comprising the force monitor (10f).

14. The upright load monitor unit (10C) of claim 12, provided in the form of a sole pad (10C, 150) that is adapted to be positioned on a ground to support the scaffold (100), the sole pad (10C, 150) comprising a support area for a base plate (115b) of the base jack (115).

15. A scaffold safety monitoring system (300) for a scaffold (100) comprising a substantially vertical upright (110), the scaffold safety monitoring system (300) comprising
- an upright load monitor unit (10) according to any of claims 8 to 14, and
- a control unit (40) that is adapted to receive load data from the upright load monitor unit (10) and signal an imbalance alarm in case an imbalance is determined.
